# EUROPÄISCHE PATENTSCHRIFT

(11) **EP 4 399 576 B1**
(45) Veröffentlichungstag und Bekanntmachung des Hinweises auf die Patenterteilung: **29.10.2025**
(21) Anmeldenummer: 21773075.3
(22) Anmeldetag: 06.09.2021
(51) Int. Cl.: G05B 19/042, H04L 67/12

(54) **SENSORNETZWERKSYSTEM**
SENSOR NETWORK SYSTEM
SYSTÈME DE RÉSEAU DE CAPTEURS

(43) Veröffentlichungstag der Anmeldung: 17.07.2024
(73) Patentinhaber: Fraba B.V., 6416 SG Heerlen (NL)
(72) Erfinder: SCHUBERT, Tobias, 50735 Köln (DE); PRITZKAU, Dimitri, 53844 Troisdorf (DE)
(74) Vertreter: terpatent PartGmbB
(86) Internationale Anmeldenummer: PCT/EP2021/074455
(87) Internationale Veröffentlichungsnummer: WO 2023/030659

(56) Entgegenhaltungen:
- EP-A1- 1 441 320
- DE-A1- 102005 022 989

## Beschreibung

Die vorliegende Erfindung betrifft ein Sensornetzwerksystem mit einer Vielzahl von Sensorvorrichtungen, die jeweils umfassen: eine Erfassungseinheit zur Erfassung einer physikalischen Größe und zur Bereitstellung eines entsprechenden Messsignals, eine Recheneinheit zur Verarbeitung des Messsignals und zur Bereitstellung von auf dem Messsignal basierenden Messdaten, und eine Datenschnittstelle, über die Ausgabedaten auslesbar sind.

Derartige Sensornetzwerksysteme können beispielsweise zur Überwachung von Maschinen oder Industrieanlagen verwendet werden, wobei die einzelnen Sensorvorrichtungen typischerweise an unterschiedlichen Teilen der Maschine beziehungsweise der Industrieanlage angeordnet sind.

Ein Sensornetzwerksystem mit einer Vielzahl von Sensorvorrichtungen ist beispielsweise aus der WO 2021/052585 A1 bekannt, wobei die Ausgabedaten aller Sensorvorrichtungen an eine Basisstation übertragen werden, über welche diese dann von extern auslesbar sind. Die Ausgabedaten der einzelnen Sensorvorrichtungen werden hierbei durch jede Sensorvorrichtung individuell bestimmt, sodass jede Sensorvorrichtung eine entsprechend leistungsstarke Recheneinheit aufweisen muss.

Weitere Sensornetzwerksysteme eingangs genannter Art sind aus der EP 1 441 320 A1 und aus der DE 10 2005 022 989 A1 bekannt.

Es stellt sich vor diesem Hintergrund die Aufgabe, ein effizientes Sensornetzwerksystem zu schaffen.

Diese Aufgabe wird durch ein Sensornetzwerksystem mit den Merkmalen des Hauptanspruchs 1 gelöst.

Das erfindungsgemäße Sensornetzwerksystem umfasst eine Vielzahl von vorzugsweise identischen Sensorvorrichtungen. Grundsätzlich kann das Sensornetzwerksystem jedoch auch beliebig viele verschiedene Arten von miteinander verbundenen Sensorvorrichtungen umfassen. Die Sensorvorrichtungen sind auf bekannte Weise über ein Datenübertragungsnetzwerk, beispielsweise über einen Datenbus, miteinander verbunden, um einen Datenaustausch zwischen den einzelnen Sensorvorrichtungen sowie potenziell vorhandenen weiteren Teilnehmern des Sensornetzwerksystems zu ermöglichen.

Jede erfindungsgemäße Sensorvorrichtung umfasst hierbei mindestens eine Erfassungseinheit zur Erfassung einer physikalischen Größe und zur Bereitstellung eines entsprechenden Messsignals. Vorteilhafterweise kann die Sensorvorrichtung mehrere Erfassungseinheiten zur Erfassung mehrerer unterschiedlicher physikalischer Größen umfassen.

Jede erfindungsgemäße Sensorvorrichtung umfasst ferner eine Recheneinheit zur Verarbeitung des mindestens einen Messsignals und zur Bereitstellung von auf dem mindestens einen Messsignal basierenden Messdaten. Typischerweise umfasst die Recheneinheit einen Mikrokontroller oder ein sogenanntes System-on-a-Chip (SoC) sowie einen Datenspeicher.

Das von der Sensoreinheit bereitgestellte Messsignal kann ein analoges Signal sein, aus dessen Amplitude und/oder Frequenz die entsprechende physikalische Größe ableitbar ist. In diesem Fall umfasst die Recheneinheit einen sogenannten Analog-Digital-Umsetzer zur Umsetzung des analogen Messsignals in einen digitalen Datenstrom aus Messsignalwerten. Das Messsignal kann jedoch auch ein digitales Signal, also ein digitaler Datenstrom, sein, das mindestens einen Messwert umfasst. Grundsätzlich kann das Messsignal jedes beliebige Signal sein, über welches eine Information über die von der Sensoreinheit erfasste physikalische Größe übertragbar ist.

Die von der Recheneinheit bereitgestellten Messdaten umfassen typischerweise einen aus dem Messsignal abgeleiteten oder durch das Messignal übertragenen Messwert, der die von der Sensoreinheit erfasste physikalische Größe angibt. Es ist jedoch auch vorstellbar, dass die Messdaten einen Messsignalfrequenzwert, einen Messsignalamplitudenwert und/oder einzelne Messsignalwerte eines (analogen) Messignals umfassen. Grundsätzlich können die von der Recheneinheit bereitgestellten Messdaten jede beliebige Art von basierend auf dem Messsignal bestimmten digitalen Daten sein.

Jede erfindungsgemäße Sensorvorrichtung umfasst ferner mindestens eine Datenschnittstelle, über die basierend auf den Messdaten bestimmte Ausgabedaten auslesbar sind. Vorzugsweise umfasst die Sensorvorrichtung eine Funkdatenschnittstelle, besonders bevorzugt eine Mobilfunkschnittstelle, zum Datenaustausch mit einer entfernten Datenverarbeitungseinheit, sowie eine kabelgebundene Datenschnittstelle zum Datenaustausch mit anderen Teilnehmern des Sensornetzwerksystems.

Erfindungsgemäß umfasst das Sensornetzwerksystem eine zentrale Auswerteeinheit, der die Messdaten von mindestens zwei der Sensorvorrichtungen, vorzugsweise von allen Sensorvorrichtungen, bereitgestellt sind. Hierzu können die entsprechenden Sensorvorrichtungen eingerichtet sein, die Messdaten aktiv an die zentrale Auswerteeinheit zu übertragen, und/oder kann die zentrale Auswerteeinheit eingerichtet sein, die Messdaten von den entsprechenden Sensorvorrichtungen abzurufen. In der zentralen Auswerteeinheit ist ein zentraler Auswertealgorithmus hinterlegt, typischerweise in Form eines ausführbaren Computerprogramms, der die Messdaten der Sensorvorrichtungen als Eingabe erhält und als Ausgabe individuelle Ausgabedaten für die einzelnen Sensorvorrichtungen liefert. Die zentrale Auswerteeinheit ist also eingerichtet, basierend auf den Messdaten der mindestens zwei Sensorvorrichtungen - mittels des zentralen Auswertealgorithmus - individuelle Ausgabedaten für die mindestens zwei Sensorvorrichtungen zu bestimmen. Für jede dieser Sensorvorrichtungen werden also individuelle, für die jeweilige Sensorvorrichtung spezifische Ausgabedaten bestimmt. Die zentrale Auswerteeinheit ist erfindungsgemäß ferner eingerichtet, die bestimmten Ausgabedaten der jeweiligen Sensorvorrichtung bereitzustellen, sodass die Ausgabedaten dann über die Datenschnittstellen der einzelnen Sensorvorrichtungen auslesbar sind.

Die zentrale Auswerteeinheit ist eingerichtet eine zentrale Messdatenauswertung für mindestens zwei der Sensorvorrichtungen des erfindungsgemäßen Sensornetzwerksystems, vorzugsweise für alle Sensorvorrichtungen des erfindungsgemäßen Sensornetzwerksystems, durchzuführen. Die zentrale Auswerteeinheit ermöglicht folglich die Ausführung relativ komplexer Auswertealgorithmen, ohne dass hierfür in jeder Sensorvorrichtung eine entsprechend leistungsstarke Recheneinheit vorhanden sein muss. Dies schafft ein effizientes Sensornetzwerksystem.

Vorzugsweise ist die zentrale Auswerteeinheit durch die Recheneinheit einer der Sensorvorrichtungen gebildet, sodass für die zentrale Auswerteeinheit keine separate Vorrichtung in dem Sensornetzwerksystem vorgesehen werden muss. Typischerweise umfasst die entsprechende Recheneinheit zur Ausführung des zentralen Auswertealgorithmus einen relativ leistungsstarken Mikrokontroller. Grundsätzlich ist auch vorstellbar, dass die Recheneinheiten mehrere Sensorvorrichtungen eingerichtet sind, die zentrale Auswerteeinheit zu bilden, und diese wechselweise die Funktion der zentralen Auswerteeinheit übernehmen. Dies schafft ein besonders effizientes und vielseitig einsetzbares Sensornetzwerksystem.

Vorteilhafterweise ist die zentrale Auswerteeinheit eingerichtet, mindestens zwei Teilberechnungsbefehle zur Berechnung eines Zwischenwertes des zentralen Auswertealgorithmus zu erzeugen, die mindestens zwei Teilberechnungsbefehle den Recheneinheiten von mindestens zwei verschiedenen Sensorvorrichtungen bereitzustellen, und die durch die mindestens zwei Teilberechnungsbefehle in den Recheneinheiten der mindestens zwei verschiedenen Sensorvorrichtungen berechneten Zwischenwerte von den mindesten zwei verschiedenen Sensorvorrichtungen zu empfangen oder abzurufen. Die Teilberechnungsbefehle können hierbei jeweils beliebig komplex sein und auch zur Bestimmung von mehr als einem Zwischenwert des zentralen Auswertealgorithmus ausgelegt sein. Vorzugsweise ist die zentrale Auswerteeinheit eingerichtet, jeden Teilberechnungsbefehl einer verschiedenen Recheneinheit bereitzustellen. Dadurch, dass der zentrale Auswertealgorithmus in mehrere Teilberechnungsbefehle unterteilt wird, die wiederum von den Recheneinheiten mehrere Sensorvorrichtungen ausgeführt werden, kann ein relativ komplexer Auswertealgorithmus ausgeführt werden, ohne dass hierfür eine besonders leistungsstarke Recheneinheit vorgesehen werden muss. Dies schafft ein besonders vielseitig einsetzbares Sensornetzwerksystem.

Vorzugsweise umfassen die Sensorvorrichtungen jeweils eine Gyroskopsensoreinheit und/oder eine Beschleunigungssensoreinheit, sind die Sensorvorrichtungen jeweils an einem unterschiedlichen beweglichen Teil einer Maschine befestigt, und geben die Ausgabedaten der Sensorvorrichtungen jeweils eine räumliche Lage und/oder Ausrichtung des entsprechenden Teils der Maschine an. Hierbei ermöglicht die zentrale Auswerteeinheit mit dem zentralen Auswertealgorithmus eine besonders exakte Bestimmung der Lage und/oder Ausrichtung der einzelnen Maschinenteile, da dem zentralen Auswertealgorithmus die Messdaten aller Maschinenteile zur Verfügung stehen. Sensorvorrichtungen mit einer Gyroskopsensoreinheit und/oder einer Beschleunigungssensoreinheit werden beispielweise auch als Drehratensensor, Kreiselinstrument, Beschleunigungsmesser, Beschleunigungsaufnehmer, Akzelerometer, Vibrationsaufnehmer, Schwingungsaufnehmer, G-Sensor, B-Messer oder inertiale Messeinheit bezeichnet. Besonders bevorzugt ist die Maschine eine Baumaschine, insbesondere ein Bagger oder ein Kran, wobei die Sensorvorrichtungen an verschiedenen Teilen eines Auslegers der Baumaschine angeordnet sind, um eine Erfassung der räumlichen Lage und Ausrichtung des Auslegers zu ermöglichen.

Ein Ausführungsbeispiel eines erfindungsgemäßen Sensornetzwerksystems wird nachfolgend anhand der beigefügten Figuren beschrieben, wobei
Figur 1 schematisch ein erfindungsgemäßes Sensornetzwerksystem zeigt, das an einem Bagger angeordnet ist,
Figur 2 eine schematische Darstellung einer Sensorvorrichtung des Sensornetzwerksystems aus Figur 1 zeigt, und
Figur 3 schematisch einen Datenaustausch zwischen Sensorvorrichtungen des Sensornetzwerksystems aus Figur 1 bei der Bestimmung von Ausgabedaten zeigt.

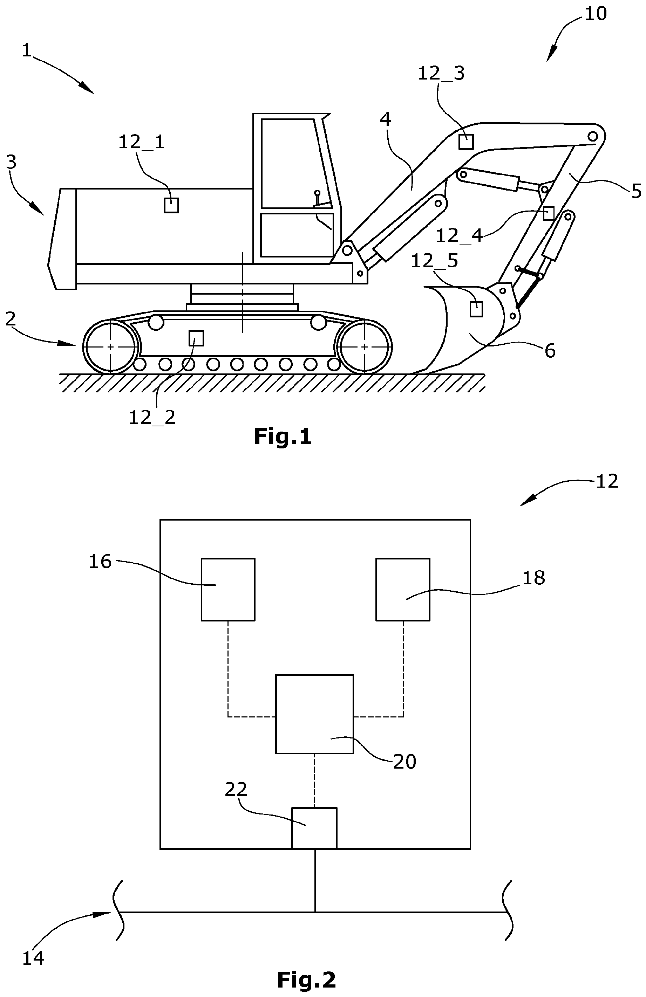

Figur 1 zeigt einen Bagger 1 mit einem Unterwagen 2, einem drehbar auf dem Unterwagen gelagerten Oberwagen 3, einem schwenkbar an dem Oberwagen 3 befestigten Ausleger 4, einem schwenkbar an dem Ausleger 4 befestigten Baggerstiel 5 und einer schwenkbar an dem Baggerstiel 5 befestigten Baggerschaufel 6.

Figur 1 zeigt ferner schematisch ein erfindungsgemäßes Sensornetzwerksystem 10, das an dem Bagger 1 angeordnet ist, um eine räumliche Lage und Ausrichtung des Baggers 1 sowie der einzelnen Teile 2-6 des Baggers 1 zu erfassen.

Das Sensornetzwerksystem 10 umfasst fünf Sensorvorrichtungen 12_1-12_5, die über ein Datenübertragungsnetzwerk 14 miteinander verbunden sind. Die erste Sensorvorrichtung 12_1 ist an dem Oberwagen 3 angeordnet, die zweite Sensorvorrichtung 12_2 ist an dem Unterwagen 2 angeordnet, die dritte Sensorvorrichtung 12_3 ist an dem Ausleger 4 angeordnet, die vierte Sensorvorrichtung 12_4 ist an dem Baggerstiel 5 angeordnet, und die fünfte Sensorvorrichtung 12_5 ist an der Baggerschaufel 6 angeordnet.

Die fünf Sensorvorrichtungen 12_1-12_5 sind im vorliegenden Ausführungsbeispiel im Wesentlichen identisch aufgebaut. Zur Vereinfachung werden daher in Figur 2 sowie in der nachfolgenden Beschreibung generische Bezugszeichen, also Bezugszeichen ohne Index 1-5, verwendet, sofern sie alle Sensorvorrichtungen 12_1-12_5 beziehungsweise eine beliebige der Sensorvorrichtungen 12_1-12_5 betreffen.

Jede Sensorvorrichtung 12 umfasst im vorliegenden Ausführungsbeispiel zwei Erfassungseinheiten 16,18. Die erste Erfassungseinheit 16 ist eine dreiachsige Gyroskopsensoreinheit, die eingerichtet ist, Drehgeschwindigkeiten entlang dreier Raumachsen zu erfassen und als digitales Drehgeschwindigkeitsmesssignal bereitzustellen. Die zweite Erfassungseinheit 18 ist eine dreiachsige Beschleunigungssensoreinheit, die eingerichtet ist, Beschleunigungen entlang dreier Raumachsen zu erfassen und als digitales Beschleunigungsmesssignal bereitzustellen.

Jede Sensorvorrichtung 12 umfasst ferner eine Recheneinheit 20, die mit den beiden Erfassungseinheiten 16,18 verbunden ist und der das Drehgeschwindigkeitsmesssignal und das Beschleunigungsmesssignal bereitgestellt sind. Die Recheneinheit 20 ist eingerichtet, das Drehgeschwindigkeitsmesssignal und das Beschleunigungsmesssignal zu verarbeiten und darauf basierende Messdaten M bereitzustellen. Die Messdaten M umfassen hierbei Drehgeschwindigkeitsmesswerte für die drei Raumachsen der Gyroskopsensoreinheit sowie Beschleunigungsmesswerte für die drei Raumachsen der Beschleunigungssensoreinheit.

Jede Sensorvorrichtung 12 umfasst ferner eine Datenschnittstelle 22, über die definierte Ausgabedaten A aus der Sensorvorrichtung 12 auslesbar sind. Im vorliegenden Ausführungsbeispiel dient die Datenschnittstelle 22 ferner der Anbindung an das Datenübertragungsnetzwerk 14. Für die Anbindung an das Datenübertragungsnetzwerk 14 des Sensornetzwerksystems 10 und für das Auslesen der Ausgabedaten A können jedoch auch verschiedene Datenschnittstellen vorgesehen sein.

Das Sensornetzwerksystem 10 umfasst eine zentrale Auswerteeinheit 24, die im vorliegenden Ausführungsbeispiel durch die Recheneinheit 20 der ersten Sensorvorrichtung 12_1 gebildet ist. Die zentrale Auswerteeinheit 24 ist eingerichtet, über das Datenübertragungsnetzwerk 14 die Messdaten M_2 der zweiten Sensorvorrichtung 12_2, die Messdaten M_3 der dritten Sensorvorrichtung 12_3, die Messdaten M_4 der vierten Sensorvorrichtung 12_4 und die Messdaten M_5 der fünften Sensorvorrichtung 12_5 abzurufen. Die zentrale Auswerteeinheit 24 hat ferner Zugriff auf die Messdaten M_1 der ersten Sensorvorrichtung 12_1.

Die zentrale Auswerteeinheit 24 umfasst einen zentralen Auswertealgorithmus, der ausgelegt ist, basierend auf den Messdaten M_1-M_5 der Sensorvorrichtungen 12_1-12_5 individuelle Ausgabedaten A_1-A_5 für jede der Sensorvorrichtungen 12_1-12_5 zu bestimmen. Im vorliegenden Ausführungsbeispiel geben die fünf bestimmten Ausgabedaten A_1-A_5 jeweils zumindest eine Neigung der jeweiligen Sensorvorrichtung 12 und somit des entsprechenden Teils 2,3,4,5,6 des Baggers 1 an.

Im vorliegenden Ausführungsbeispiel ist die zentrale Auswerteeinheit 24 eingerichtet, mindestens zwei, Teilberechnungsbefehle T zu erzeugen, die jeweils ausgelegt sind, einen Zwischenwert Z des zentralen Auswertealgorithmus zu bestimmen, und die Teilberechnungsbefehle T jeweils der Recheneinheit 20 einer der Sensorvorrichtungen 12_1-12_5 bereitzustellen.

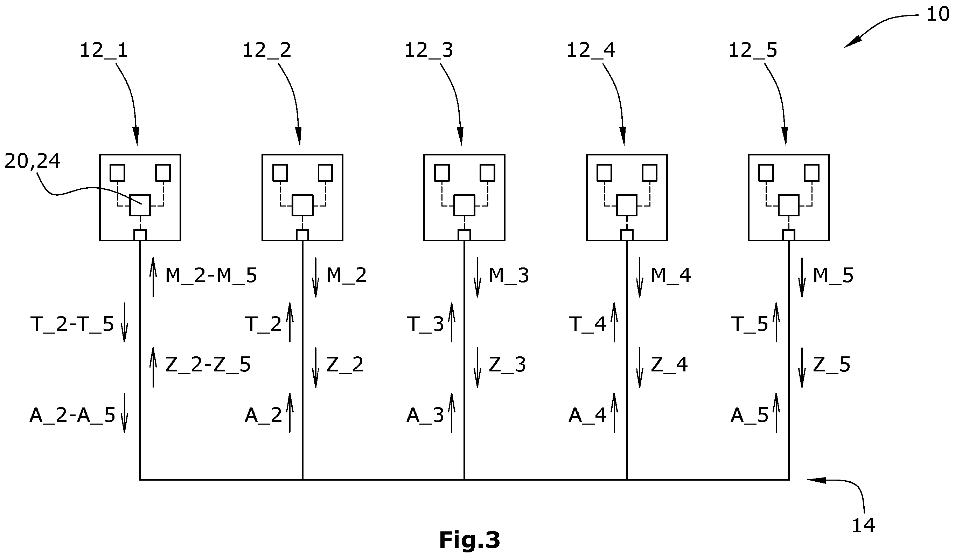

Im in Figur 3 dargestellten Beispiel werden von der zentrale Auswerteeinheit 24 fünf Teilberechnungsbefehle T_1-T_5 erzeugt, wobei der erste Teilberechnungsbefehl T_1 durch die Recheneinheit 20 der ersten Sensorvorrichtung 12_1, welche die zentrale Auswerteeinheit 24 bildet, selbst ausgeführt wird, der zweite Teilberechnungsbefehl T_2 von der zentralen Auswerteeinheit 24 über das Datenübertragungsnetzwerk 14 der Recheneinheit 20 der zweiten Sensorvorrichtung 12_2 bereitgestellt und von dieser ausgeführt wird, der dritte Teilberechnungsbefehl T_3 von der zentralen Auswerteeinheit 24 über das Datenübertragungsnetzwerk 14 der Recheneinheit 20 der dritten Sensorvorrichtung 12_3 bereitgestellt und von dieser ausgeführt wird, der vierte Teilberechnungsbefehl T_4 von der zentralen Auswerteeinheit 24 über das Datenübertragungsnetzwerk 14 der Recheneinheit 20 der vierten Sensorvorrichtung 12_4 bereitgestellt und von dieser ausgeführt wird, und der fünfte Teilberechnungsbefehl T_5 von der zentralen Auswerteeinheit 24 über das Datenübertragungsnetzwerk 14 der Recheneinheit 20 der fünften Sensorvorrichtung 12_5 bereitgestellt und von dieser ausgeführt wird.

Ferner ist die zentrale Auswerteeinheit 24 im vorliegenden Ausführungsbeispiel eingerichtet, die durch die Teilberechnungsbefehle T in der Recheneinheiten 20 der entsprechenden Sensorvorrichtung 12 berechneten Zwischenwerte Z von den entsprechenden Sensorvorrichtungen 12 abzurufen.

Im in Figur 3 dargestellten Beispiel wird folglich der durch den zweiten Teilberechnungsbefehl T_2 in der Recheneinheit 20 der zweiten Sensorvorrichtung 12_2 berechnete zweite Zwischenwert Z_2, der durch den dritten Teilberechnungsbefehl T_3 in der Recheneinheit 20 der dritten Sensorvorrichtung 12_3 berechnete dritte Zwischenwert Z_3, der durch den vierten Teilberechnungsbefehl T_4 in der Recheneinheit 20 der vierten Sensorvorrichtung 12_4 berechnete vierte Zwischenwert Z_4 und der durch den fünften Teilberechnungsbefehl T_5 in der Recheneinheit 20 der fünften Sensorvorrichtung 12_5 berechnete fünfte Zwischenwert Z_5 von der zentralen Auswerteeinheit über das Datenübertragungsnetzwerk 14 von der jeweiligen Sensorvorrichtung 12 abgerufen. Die zentrale Auswerteeinheit 24 hat ferner Zugriff auf den in der Recheneinheit 20 der ersten Sensorvorrichtung 12_1 berechneten ersten Zwischenwert Z_1.

Alle berechneten Zwischenwerte Z_1-Z_5 werden dem zentralen Auswertealgorithmus bereitgestellt, welcher darauf basierend die fünf individuellen Ausgabedaten A_1-A_5 für die fünf Sensorvorrichtungen 12_1-12_5 bestimmt.

Die zentrale Auswerteeinheit 24 ist ferner eingerichtet die bestimmten Ausgabedaten A_1-A_5 der jeweiligen Sensorvorrichtung 12 bereitzustellen. Im Speziellen ist die zentrale Auswerteeinheit 24 eingerichtet, die bestimmten zweiten Ausgabedaten A_2 über das Datenübertragungsnetzwerk 14 an die zweite Sensorvorrichtungen 12_2 zu übertragen, die bestimmten dritten Ausgabedaten A_3 über das Datenübertragungsnetzwerk 14 an die dritte Sensorvorrichtungen 12_3 zu übertragen, die bestimmten vierten Ausgabedaten A_4 über das Datenübertragungsnetzwerk 14 an die vierte Sensorvorrichtungen 12_4 zu übertragen und die bestimmten fünften Ausgabedaten A_5 über das Datenübertragungsnetzwerk 14 an die fünfte Sensorvorrichtungen 12_5 zu übertragen. Die bestimmten ersten Ausgabedaten A_1 werden in der ersten Sensorvorrichtungen 12_1, deren Recheneinheit 20 die zentrale Auswerteeinheit 24 bildet, gespeichert.

Die Ausgabedaten A_1-A_5 sind dann über die Datenschnittstelle 22 der jeweiligen Sensorvorrichtung 12 auslesbar. Im speziellen sind die ersten Ausgabedaten A_1 über die Datenschnittstelle 22 der ersten Sensorvorrichtungen 12_1 auslesbar, die zweiten Ausgabedaten A_2 über die Datenschnittstelle 22 der zweiten Sensorvorrichtungen 12_2 auslesbar, die dritten Ausgabedaten A_3 über die Datenschnittstelle 22 der dritten Sensorvorrichtungen 12_3 auslesbar, die vierten Ausgabedaten A_4 über die Datenschnittstelle 22 der vierten Sensorvorrichtungen 12_4 auslesbar und die fünften Ausgabedaten A_5 über die Datenschnittstelle 22 der fünften Sensorvorrichtungen 12_5 auslesbar.

### Bezugszeichenliste

- 1: Bagger
- 2: Unterwagen
- 3: Oberwagen
- 4: Ausleger
- 5: Baggerstiel
- 6: Baggerschaufel
- 10: Sensornetzwerksystem
- 12: Sensorvorrichtungen
- 14: Datenübertragungsnetzwerk
- 16: erste Erfassungseinheit (Gyroskopsensoreinheit)
- 18: zweite Erfassungseinheit (Beschleunigungssensoreinheit)
- 20: Recheneinheit
- 22: Datenschnittstelle
- 24: zentrale Auswerteeinheit

- A: Ausgabedaten
- M: Messdaten
- T: Teilberechnungsbefehle
- Z: Zwischenwerte

## Patentansprüche

1. Sensornetzwerksystem (10) mit einer Vielzahl von Sensorvorrichtungen (12_1-12_5), die jeweils umfassen:
- eine Erfassungseinheit (16,18) zur Erfassung einer physikalischen Größe und zur Bereitstellung eines entsprechenden Messsignals,
- eine Recheneinheit (20) zur Verarbeitung des Messsignals und zur Bereitstellung von auf dem Messsignal basierenden Messdaten (M_1-M_5), und
- eine Datenschnittstelle (22), über die Ausgabedaten (A_1-A_5) auslesbar sind,
**dadurch gekennzeichnet, dass**
eine zentrale Auswerteeinheit (24) vorhanden ist, die eingerichtet ist:
- basierend auf den Messdaten (M_1-M_5) von mindestens zwei der Sensorvorrichtungen (12) mittels eines zentralen Auswertealgorithmus individuelle Ausgabedaten (A_1-A_5) für die mindestens zwei Sensorvorrichtungen (12_1-12_5) zu bestimmen, und
- die bestimmten Ausgabedaten (A_1-A_5) der jeweiligen Sensorvorrichtung (12_1-12_5) bereitzustellen.

2. Sensornetzwerksystem (10) nach Anspruch 1, wobei die zentrale Auswerteeinheit (24) durch die Recheneinheit (20) einer der Sensorvorrichtungen (12_1-12_5) gebildet ist.

3. Sensornetzwerksystem (10) nach einem der vorhergehenden Ansprüche, wobei die zentrale Auswerteeinheit (24) ferner eingerichtet ist:
- mindestens zwei Teilberechnungsbefehle (T_1-T_5) zur Berechnung eines Zwischenwertes (Z_1-Z_5) des zentralen Auswertealgorithmus zu erzeugen,
- die mindestens zwei Teilberechnungsbefehle (T_1-T_5) den Recheneinheiten (20) von mindestens zwei verschiedenen Sensorvorrichtungen (12_1-12_5) bereitzustellen, und
- die durch die mindestens zwei Teilberechnungsbefehle (T_1-T_5) in den Recheneinheiten (20) der mindestens zwei verschiedenen Sensorvorrichtungen (12_1-12_5) berechneten Zwischenwerte (Z_1-Z_5) von den mindesten zwei verschiedenen Sensorvorrichtungen (12_1-12_5) zu empfangen oder abzurufen.

4. Sensornetzwerksystem (10) nach einem der vorhergehenden Ansprüche, wobei:
- die Sensorvorrichtungen (12_1-12_5) jeweils eine Gyroskopsensoreinheit (16) und/oder eine Beschleunigungssensoreinheit (18) umfassen,
- die Sensorvorrichtungen (12_1-12_5) jeweils an einem unterschiedlichen beweglichen Teil (2,3,4,5,6) einer Maschine (1) befestigt sind, und
- die Ausgabedaten (A_1-A_5) der Sensorvorrichtungen (12_1-12_5) jeweils eine räumliche Lage und/oder Ausrichtung des entsprechenden Teils (2,3,4,5,6) der Maschine (1) angeben.

## Claims

1. Sensor network system (10) comprising a plurality of sensor devices (12_1-12_5), each comprising:
- a detection unit (16, 18) for detecting a physical quantity and for providing a corresponding measurement signal,
- a computing unit (20) for processing the measurement signal and for providing measurement data (M_1-M_5) which is based on the measurement signal, and
- a data interface (22) via which output data (A_1-A_5) can be read out,
**characterized in that**
a central evaluation unit (24) is provided, which is configured to:
- determine individual output data (A_1-A_5) for the at least two sensor devices (12_1-12_5) based on the measurement data (M_1-M_5) from at least two of the sensor devices (12) using a central evaluation algorithm, and
- provide the determined output data (A_1-A_5) to the respective sensor device (12_1-12_5).

2. Sensor network system (10) according to claim 1, wherein the central evaluation unit (24) is constituted by the computing unit (20) of one of the sensor devices (12_1-12_5).

3. Sensor network system (10) according to one of the preceding claims, wherein the central evaluation unit (24) is further configured to:
- generate at least two sub-calculation commands (T_1-T_5) for calculating an intermediate value (Z_1-Z_5) of the central evaluation algorithm,
- provide the at least two sub-calculation commands (T_1-T_5) to the computing units (20) of at least two different sensor devices (12_1-12₋5), and
- receive or retrieve the intermediate values (Z_1-Z_5) calculated by the at least two sub-calculation commands (T_1-T_5) in the computing units (20) of the at least two different sensor devices (12_1-12_5) from the at least two different sensor devices (12_1-12_5).

4. Sensor network system (10) according to one of the preceding claims, wherein:
- the sensor devices (12_1-12_5) each comprise a gyroscope sensor unit (16) and/or an acceleration sensor unit (18),
- the sensor devices (12_1-12_5) are each attached to a different moving part (2, 3, 4, 5, 6) of a machine (1), and
- the output data (A_1-A_5) of the sensor devices (12_1-12_5) each indicate a spatial position and/or orientation of the corresponding part (2, 3, 4, 5, 6) of the machine (1).

## Revendications

1. Système de réseau de capteurs (10) comprenant une pluralité de dispositifs de capteurs (12_1-12_5) qui comprennent chacun :
- une unité de détection (16, 18) pour détecter une grandeur physique et pour fournir un signal de mesure correspondant,
- une unité de calcul (20) pour traiter le signal de mesure et pour fournir des données de mesure (M_1-M_5) basées sur le signal de mesure, et
- une interface de données (22) par l'intermédiaire de laquelle des données de sortie (A_1-A_5) peuvent être lues,
**caractérisé en ce que**
une unité d'évaluation centrale (24) est présente, laquelle est conçue pour :
- déterminer, sur la base des données de mesure (M_1-M_5) d'au moins deux des dispositifs de capteurs (12), au moyen d'un algorithme d'évaluation central, des données de sortie individuelles (A_1-A_5) pour les au moins deux dispositifs de capteurs (12_1-12_5), et
- mettre à disposition les données de sortie déterminées (A_1-A_5) du dispositif de capteur respectif (12_1-12_5).

2. Système de réseau de capteurs (10) selon la revendication 1, dans lequel l'unité d'évaluation centrale (24) est formée par l'unité de calcul (20) de l'un des dispositifs de capteurs (12_1-12_5).

3. Système de réseau de capteurs (10) selon l'une quelconque des revendications précédentes, dans lequel l'unité d'évaluation centrale (24) est en outre conçue pour :
- générer au moins deux instructions de calcul partiel (T_1-T_5) pour le calcul d'une valeur intermédiaire (Z_1-Z_5) de l'algorithme d'évaluation central,
- mettre à disposition les au moins deux instructions de calcul partiel (T_1-T_5) aux unités de calcul (20) d'au moins deux dispositifs de capteurs différents (12_1-12_5), et
- recevoir ou appeler les valeurs intermédiaires (Z_1-Z_5) calculées par les au moins deux instructions de calcul partiel (T_1-T_5) dans les unités de calcul (20) des au moins deux dispositifs de capteurs différents (12_1-12_5) des au moins deux dispositifs de capteurs différents (12_1-12_5).

4. Système de réseau de capteurs (10) selon l'une quelconque des revendications précédentes, dans lequel :
- les dispositifs de capteurs (12_1-12_5) comprennent chacun une unité de capteur gyroscopique (16) et/ou une unité de capteur d'accélération (18),
- les dispositifs de capteurs (12_1-12_5) sont chacun fixés à une partie mobile différente (2, 3, 4, 5, 6) d'une machine (1), et
- les données de sortie (A_1-A_5) des dispositifs de capteurs (12_1-12_5) indiquent chacune une position dans l'espace et/ou une orientation de la partie correspondante (2, 3, 4, 5, 6) de la machine (1).
